# FASCICULE DE BREVET EUROPEEN

(11) **EP 1 445 877 B1**
(45) Date de publication et mention de la délivrance du brevet: **24.05.2006**
(21) Numéro de dépôt: 03300208.0
(22) Date de dépôt: 12.11.2003
(51) Int. Cl.: H04B 5/02, G06K 19/07, G01S 13/02

(54) **Communication entre transpondeurs électromagnétiques**
Kommunikation zwischen elektromagnetischen Transpondern
Communication between electromagnetic transponders

(30) Priorité: 13.11.2002 FR 0214201
(43) Date de publication de la demande: 11.08.2004
(73) Titulaire: STMicroelectronics S.A., 92120 Montrouge (FR)
(72) Inventeur: Rizzo, Pierre, 13100 Aix en Provence (FR); Conraux, Jerome, 13530 Trets (FR)
(74) Mandataire: de Beaumont, Michel

(56) Documents cités:
- EP-A- 1 136 940
- EP-A- 1 152 257
- US-A- 5 434 572
- "Radio frequency power and signal interface" ISO/IEC 14443-2 / IDENTIFICATION CARDS- CONTACTLESS INTEGRATED CIRCUIT(S) CARDS - PROXIMITY CARDS, 26 mars 1999 (1999-03-26), XP002233515
- "Radio frequency power and signal interface" ISO/IEC FCD 15693-2 / IDENTIFICATION CARDS - CONTACTLESS INTEGRATED CIRCUIT(S) CARDS- VICINITY CARDS, 9 mars 1999 (1999-03-09), XP002233516

## Description

La présente invention concerne des systèmes utilisant des transpondeurs électromagnétiques, c'est-à-dire des émetteurs récepteurs généralement mobiles susceptibles d'être interrogés, sans contact et sans fil, par une unité généralement fixe, dite borne de lecture et/ou d'écriture. L'invention concerne, plus particulièrement, des transpondeurs dépourvus d'alimentation autonome, par exemple de type carte sans contact ou étiquette électronique. Ces transpondeurs extraient l'alimentation nécessaire aux circuits électroniques qu'ils comportent du champ haute fréquence rayonnée par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou des transpondeurs à lecture-écriture qui contiennent des données qui peuvent être modifiées par la borne.

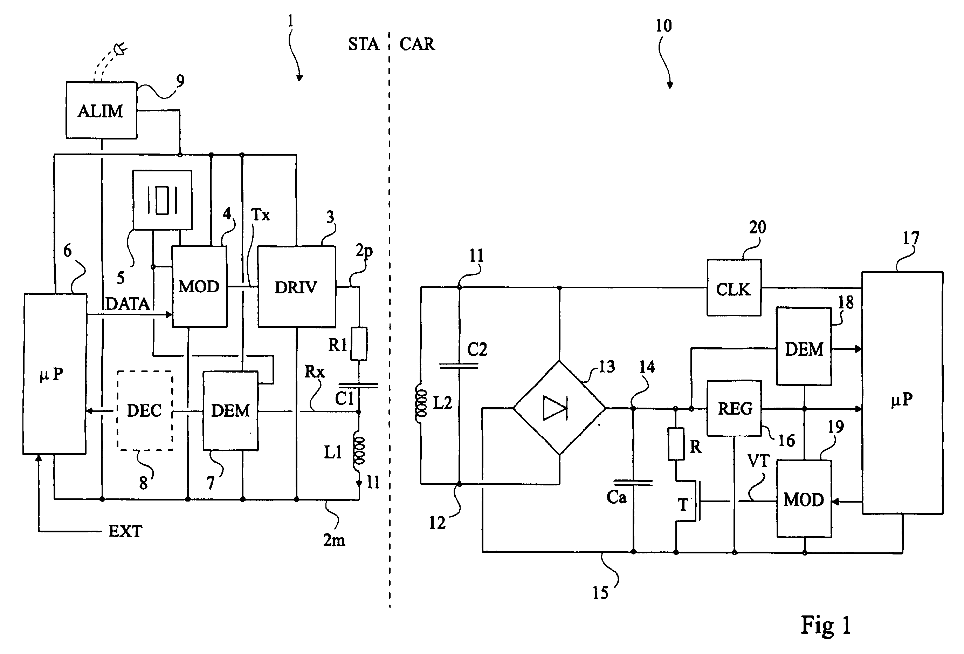

La figure 1 représente, de façon très schématique et fonctionnelle, un exemple classique d'échange de données entre une borne 1 de lecture-écriture (STA) et un transpondeur 10 (CAR).

La borne 1 est essentiellement constituée d'un circuit oscillant formé d'une inductance L1, en série avec un condensateur C1 et une résistance R1, entre une borne 2p de sortie d'un amplificateur ou coupleur d'antenne 3 et une borne 2m à un potentiel de référence (généralement la masse). L'amplificateur 3 reçoit un signal Tx de transmission haute fréquence, issu d'un modulateur 4 (MOD). Le modulateur reçoit une fréquence de référence, par exemple d'un oscillateur à quartz 5 et, si besoin, un signal DATA de données à transmettre. En l'absence de transmission de données de la borne 1 vers le transpondeur 10, le signal Tx sert uniquement de source d'énergie pour activer le transpondeur 10 si celui-ci passe dans le champ. Les données à transmettre proviennent généralement d'un système numérique, par exemple, un microprocesseur 6 (µP).

Le point de connexion du condensateur C1 et de l'inductance L1 constitue, dans l'exemple représenté en figure 1, une borne de prélèvement d'un signal Rx de données reçues d'un transpondeur 10 à destination d'un démodulateur (DEM). Une sortie du démodulateur communique (le cas échéant par l'intermédiaire d'un décodeur 8 (DEC)) les données reçues du transpondeur 10 au microprocesseur 6 de la borne 1. Le démodulateur 7 reçoit, généralement de l'oscillateur 5, un signal d'horloge ou de référence pour une démodulation de phase. Le cas échéant, la démodulation est effectuée à partir d'un signal prélevé entre le condensateur C1 et la résistance R1, et non aux bornes de l'inductance L1. Le microprocesseur 6 communique (BUS) avec différents circuits d'entrée/sortie (clavier, écran, moyen de transmission vers un serveur, etc.) et/ou de traitement. Les circuits de la borne de lecture/écriture tirent l'énergie nécessaire à leur fonctionnement d'un circuit d'alimentation 9 (ALIM) raccordé, par exemple, au réseau de distribution électrique.

Côté transpondeur 10, une inductance L2, en parallèle avec un condensateur C2, forme un circuit oscillant parallèle (appelé circuit résonnant en réception), destiné à capter le champ magnétique engendré par le circuit oscillant série L1, C1 de la borne 1. Le circuit résonnant (L2, C2) du transpondeur 10 est accordé sur la fréquence de résonance du circuit oscillant de la borne 1.

Les bornes 11 et 12 du circuit résonant L2, C2 qui correspondent aux bornes du condensateur C2 sont reliées à deux bornes d'entrée alternative d'un pont redresseur 13 dont les bornes de sortie redressée 14 et 15 sont connectées aux bornes d'un condensateur Ca de stockage d'énergie et de lissage de la tension redressée fournie par le pont 13. Le pont 13 est mono ou double alternance.

Quand le transpondeur 10 se trouve dans le champ de la borne 1, une tension haute fréquence est engendrée aux bornes du circuit résonnant L2, C2. Cette tension redressée par le pont 13 est lissée par le condensateur Ca qui fournit une tension d'alimentation à des circuits électroniques du transpondeur par l'intermédiaire d'un régulateur de tension 16 (REG). Ces circuits comprennent généralement, essentiellement un microprocesseur 17 (µP) associé à une mémoire non représentée, un démodulateur 18 (DEM) des signaux éventuellement reçus de la borne 1, et un modulateur 19 (MOD) pour transmettre des informations à la borne 1. Le transpondeur est généralement synchronisé au moyen d'une horloge (CLK) extraite par un bloc 20 du signal haute fréquence récupéré aux bornes du condensateur C2 avant redressement. Le plus souvent, tous les circuits électroniques du transpondeur 10 sont intégrés dans une même puce.

Pour transmettre des données du transpondeur 10 vers la borne 1, le modulateur 19 commande un étage de modulation (rétromodulation) du circuit résonnant L2, C2. Cet étage de modulation est généralement constitué d'un interrupteur électronique (par exemple, un transistor T) et d'une résistance R, en série entre les bornes 14 et 15.

Le transistor T est commandé à une fréquence (par exemple, 847,5 kHz) dite sous-porteuse, nettement inférieure (généralement, avec un rapport d'au moins 10) à la fréquence du signal d'excitation du circuit oscillant de la borne 1 (par exemple 13,56 MHz). Lorsque l'interrupteur T est fermé, le circuit oscillant du transpondeur est soumis à un amortissement supplémentaire par rapport à la charge constituée par les circuits 16 à 20, de sorte que le transpondeur prélève une quantité d'énergie plus importante du champ magnétique haute fréquence. Côté borne 1, l'amplificateur 3 maintient constante l'amplitude du signal d'excitation à haute fréquence. Par conséquent, la variation d'énergie du transpondeur se traduit par une variation d'amplitude et de phase du courant dans l'antenne L1. Cette variation est détectée par le démodulateur 7 de la borne qui est, soit un démodulateur de phase, soit un démodulateur d'amplitude.

Dans certains cas, l'étage de rétromodulation (transistor T, résistance R) est situé en amont du pont 13, c'est-à-dire côté de ses entrées alternatives.

La borne ne transmet généralement pas de données pendant qu'elle en reçoit du transpondeur, la transmission s'effectuant alternativement dans un sens puis dans l'autre.

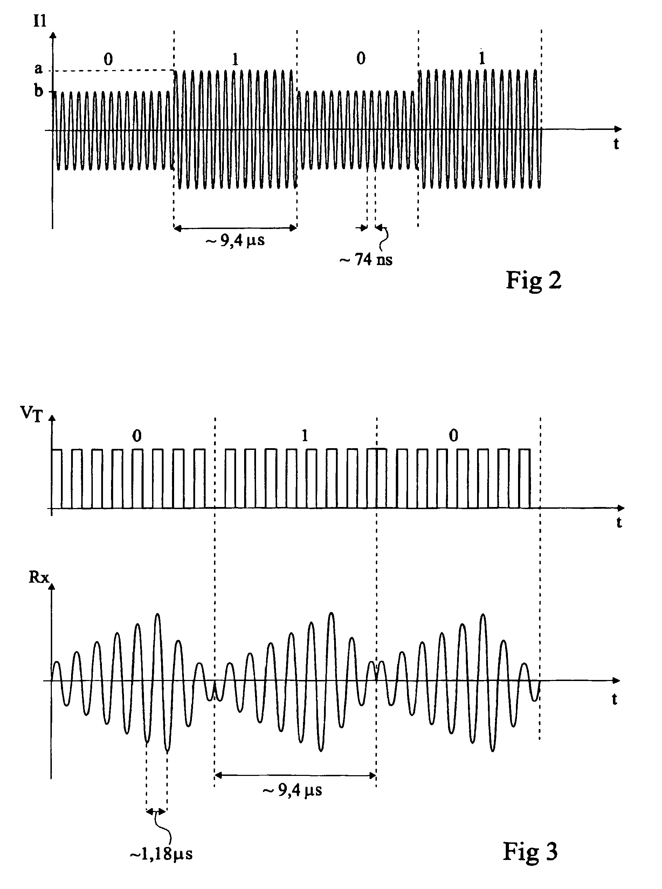

La figure 2 illustre un exemple classique de transmission de données de la borne 1 vers un transpondeur 10. Cette figure représente un exemple d'allure du signal d'excitation de l'antenne L1 pour une transmission d'un code 0101. La modulation couramment utilisée est une modulation d'amplitude avec un débit de 106 kilobits par seconde (1 bit est transmis en environ 9,5 microsecondes) nettement inférieur à la fréquence (par exemple, 13,56 MHz) de la porteuse provenant de l'oscillateur 5 (période d'environ 74 nanosecondes). La modulation d'amplitude s'effectue, soit en tout ou rien, soit avec un taux de modulation (défini comme étant la différence des amplitudes crête (a, b) entre les deux états (0 et 1) divisée par la somme de ces amplitudes) inférieur à l'unité en raison du besoin d'alimentation du transpondeur 10. Dans l'exemple de la figure 2, la porteuse à 13,56 MHz est modulée, avec un débit de 106 kilobits par seconde, en amplitude avec un taux de modulation tm de, par exemple, 10%.

La figure 3 illustre un exemple classique de transmission de données du transpondeur 10 vers la borne 1. Cette figure illustre un exemple d'allure du signal V_{T} de commande du transistor T, fourni par le modulateur 19, et du signal correspondant Rx reçu par la borne 1. Côté transpondeur, la rétromodulation est généralement du type résistif avec une porteuse dite sous-porteuse de, par exemple, 847,5 kHz (période d'environ 1,18 ms). La rétromodulation est, par exemple, basée sur un codage de type BPSK (codage binaire par saut de phase) avec un débit de l'ordre de 106 kilobits par seconde nettement inférieur à la fréquence de la sous-porteuse. En figure 3, le signal Rx a été représenté "lissé", c'est-à-dire sans faire apparaître les ondulations de la porteuse haute fréquence (à 13,56 MHz). Dans l'exemple de la figure 3, on a considéré que chacun des trois bits représentés était différent du bit précédent. Ainsi, il s'agit d'une transmission d'un code 010.

Quelque soit le type de modulation ou de rétromodulation utilisé (par exemple, d'amplitude, de phase, de fréquence) et quel que soit le type de codage des données (NRZ, NRZI, Manchester, ASK, BPSK, etc.), la modulation s'effectue de façon numérique, par saut entre deux niveaux binaires.

Comme l'illustre la figure 3, le signal V_{T} est constitué d'un train d'impulsions à la fréquence de la sous-porteuse, un saut de phase intervenant à chaque changement d'état d'un bit au bit suivant.

Si plusieurs transpondeurs sont situés dans le champ d'une même borne, des communications différentes peuvent être initiées entre chaque transpondeur et la borne de lecture-écriture. Le plus souvent, les transpondeurs transmettent des identifiants qui permettent à la borne d'individualiser des messages à leurs destinations respectives.

Dans le sens borne vers transpondeur, les transpondeurs déterminent si des messages leurs sont respectivement destinés à partir de leur identifiant contenu dans le message, qu'ils détectent après démodulation.

Toutefois, il peut se poser un problème lorsque plusieurs transpondeurs transmettent simultanément à destination d'une même borne, alors que ceux-ci sont dans le champ de cette borne. De tels conflits peuvent être mal détectés par la borne de lecture-écriture, ce qui est néfaste à la fiabilité du système.

Par ailleurs, dans certaines applications, on peut souhaiter que des transpondeurs échangent des informations. Dans un tel cas la borne sert d'intermédiaire cette communication en recevant les informations provenant d'un transpondeur pour les retransmettre à un autre en les ayant préalablement démodulés puis remodulés.

Le document EP-A-1136940 décrit une carte à puce dans laquelle sont prévus des moyens pour détecter la présence d'un signal provenant d'une autre carte. Ce doccument ne prévoit pas une autre carte Ce document ne prévoit pas de décoder les signaux interprétation.

Le document "Radio frequency power and signal interface". ISO/IEC 14443-2/IDENTIFICATION CARDS-CONTACTLESS INTEGRATED CIRCUIT(S) CARDS - PROXIMITY CARDS: 26 mars 1999, décrit une norme à laquelle s'applique par exemple la présente invention.

La présente invention vise à proposer une nouvelle solution d'échange d'informations entre deux transpondeurs dans le champ d'une borne de lecture-écriture.

L'invention vise également à proposer une solution qui ne nécessite aucune modifïcation de bornes de lecture-écriture existantes.

L'invention vise également à proposer une solution qui permette de résoudre les problèmes de conflits lorsque deux transpondeurs sont présents dans le champ d'une borne de lecture-écriture avec laquelle ils communiquent

Pour atteindre ces objets et d' autres, la présente invention prévoit un transpondeur électromagnétique destiné à prélever l'énergie nécessaire à son fonctionnement d'un champ rayonné par une borne d'émission d'une porteuse à une rayonné par une borne d'émission d'une porteuse à une première fréquence de téléalimentation et à rétromoduler le signal reçu au rythme d'une sous-porteuse à une deuxième fréquence inférieure à la première, et comportant des moyens propres à démoduler et décoder des signaux modulés par ladite sous-porteuse.

Selon un mode de réalisation de la présente invention, le transpondeur comprend un circuit oscillant en amont d'un moyen de redressement propre à fournir une tension continue d'alimentation d'un, circuit électroniques le circuit électronique des moyens pour émettre des informations codées numériquement, et le transpondeur comportant undémodulateur propre à différencier des informations reçues au rythme de la sous-porteuse de rétromodulation d'un autre transpondeur par rapport à des informations reçues, au rythme d'une troisième fréquence encore inférieure, depuis la borne de lecture-écriture.

Selon un mode de réalisation de la présente invention, ledit démodulateur comporte deux branches parallèles ayant chacune un filtre centré respectivement sur les deuxième et troisième fréquences, chaque filtre étant associé à un décodeur numérique.

Selon un mode de réalisation de la présente invention, un premier décodeur associé au filtre centré sur la fréquence de rétromodulation est un décodeur de type par saut de phase, un deuxième décodeur associé à la troisième fréquence étant un décodeur de type par saut d'amplitude.

L'invention prévoit également un système de communication sans contact et sans fil entre au moins deux transpondeurs électromagnétiques dépourvus d'alimentation autonome, chaque transpondeur comprenant des moyens propres à prélever l'énergie nécessaire à l'alimentation de ses circuits, d'un champ électronique à une première fréquence de téléalimentation rayonné par au moins une borne de lecture-écriture, et des moyens pour démoduler et décoder des signaux émis par un autre transpondeur en modulation d'une sous-porteuse à une deuxième fréquence.

Selon un mode de réalisation de la présente invention, chaque transpondeur comporte des démodulateurs et décodeurs distincts dédiés respectivement à la réception de signaux émis par un autre transpondeur et à la réception de signaux émis par la borne de lecture-écriture.

Selon un mode de réalisation de la présente invention, la première fréquence est à 13,56 MHz, la deuxième fréquence étant à 847,5 kHz et la troisième fréquence étant à 106,5 kHz.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 décrites précédemment sont destinées à exposer l'état de la technique et le problème posé ;
la figure 4 représente, de façon très schématique, un système de communication entre transpondeurs selon un mode de réalisation de la présente invention ;
la figure 5 représente un premier mode de réalisation d'un transpondeur électromagnétique selon la présente invention ; et
la figure 6 représente un deuxième mode de réalisation d'un transpondeur selon l'invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, la constitution et le codage des messages selon différents protocoles n'ont pas été détaillés et ne font pas l'objet de la présente invention.

Une caractéristique de la présente invention est de prévoir une communication directe entre deux transpondeurs électromagnétiques présents dans le champ d'une borne de lecture-écriture d'où ils tirent leurs alimentations.

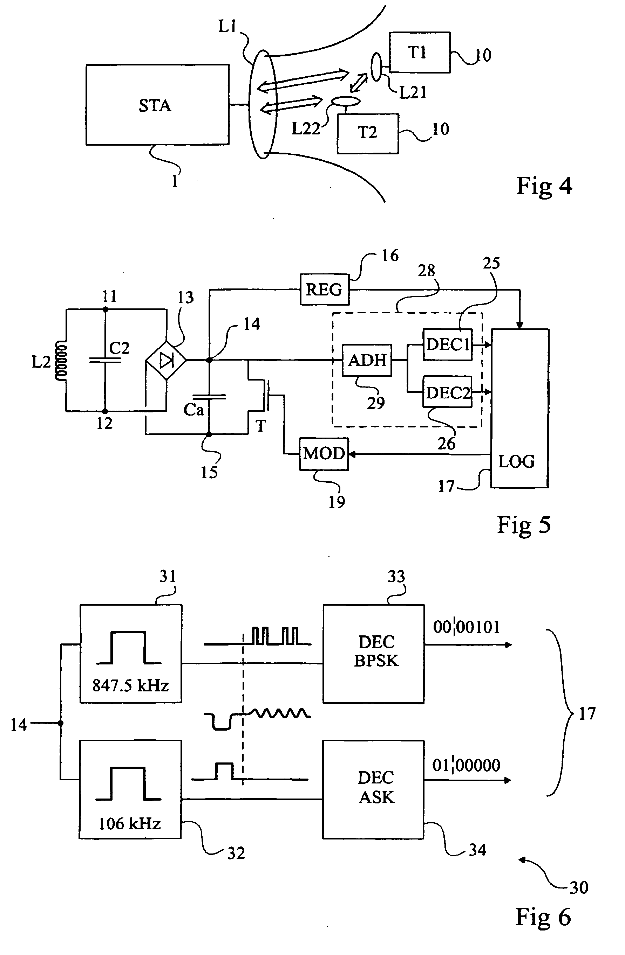

La figure 4 illustre, de façon très schématique et sous forme de blocs, un mode de réalisation d'un système de communication selon la présente invention.

Comme précédemment, un lecteur 1 (STA) génère par l'intermédiaire d'une antenne inductance L1 un champ électromagnétique à une fréquence correspondante à une porteuse de téléalimentation de transpondeurs 10 (T1, T2). Chaque transpondeur comprend lui-même une antenne (inductances L21, L22) servant à capter le rayonnement électromagnétique de la borne pour en tirer une alimentation de ses circuits internes.

Les transpondeurs 10 sont, selon l'invention, capables non seulement de communiquer avec la borne 1 mais également directement entre eux comme l'illustre les flèches bidirectionnelles de la figure 4.

Quand deux transpondeurs sont dans le champ d'une même borne, et qu'un des transpondeurs transmet des informations en rétromodulation, cela influe sur le champ électromagnétique disponible pour l'autre transpondeur. Celui-ci peut donc être en mesure de détecter les informations transmises sous réserve d'être capable de les démoduler ou de les décoder.

Selon un premier mode de réalisation de l'invention, on utilise le même démodulateur pour réceptionner les informations provenant de la borne (par exemple, à une fréquence de 106 kHz) et les informations provenant d'un autre transpondeur en rétromodulation (par exemple, à une fréquence de 847,5 kHz). Dans ce cas, on prévoit en aval du démodulateur du transpondeur, plusieurs décodeurs selon le type d'information à détecter. Ce sont alors ces décodeurs qui différentient les transmissions à 106 kilobits des transmissions à la fréquence de 847,5 kHz.

La figure 5 représente, sous forme de blocs et de façon très schématique, un transpondeur selon le premier mode de réalisation de l'invention.

On retrouve le circuit résonant constitué de l'inductance L2 en parallèle avec un condensateur C2 entre des bornes 11 et 12 d'entrée d'un pont redresseur 13 (ici double alternance). Les bornes de sortie 14 et 15 redressées du pont 13 fournissent la tension d'alimentation aux bornes d'un condensateur de stockage et de lissage Ca. On retrouve également le régulateur 16 d'alimentation des différents circuits du transpondeur et notamment du démodulateur 28, du modulateur 19 et des circuits logiques 17 de commande et qui sont constitués, soit d'un microprocesseur, soit d'un circuit en logique câblée. La figure 5 illustre une variante du circuit de rétromodulation dans lequel le transistor T de rétromodulation est seul placé en parallèle sur le condensateur Ca, sa résistance série à l'état passant constituant la résistance de rétromodulation.

Pour simplifier, tous les constituants n'ont pas été représentés en figure 5. En particulier, l'horloge est bien entendue, si nécessaire, présente. De même, les différentes liaisons d'alimentation des circuits n'ont pas toutes été indiquées.

Selon l'invention, la sortie du démodulateur 28 est envoyée sur deux décodeurs 25 et 26 (DEC1 et DEC2) destinés à décoder chacun l'un des types de signaux susceptibles d'être reçus, à savoir ceux reçus au rythme de 106 kilobits par seconde d'une borne 1 et ceux reçus au rythme de 847,5 kHz d'un autre transpondeur.

Le démodulateur 28 propre à l'invention comporte une tête analogique 29 (ADH) fournissant l'enveloppe du signal reçu et porté par la fréquence de 13,56 MHz. Cette enveloppe est, soit modulée au rythme de la porteuse de rétromodulation 847,5 kilohertz, soit au rythme de transmission de la borne (106 kHz). Par suite, chaque décodeur DEC1 ou DEC2 est capable de détecter les variations de niveaux selon qu'elles sont au rythme de 106 kHz ou au rythme de 847,5 kHz. Les sorties respectives des décodeurs fournissent les signaux démodulés provenant respectivement de la borne ou d'un autre transpondeur dans le champ et en couplage proche avec le transpondeur concerné.

La figure 6 représente un deuxième mode de réalisation d'un décodeur 30 selon l'invention.

Selon ce mode de réalisation, la sortie 14 du pont redresseur est reliée aux entrées respectives de deux filtres 31 et 32 respectivement centrés sur les fréquences de 847,5 kHz et 106 kHz, par exemple, correspondant aux fréquences de rétromodulation et de modulation de la borne. Les sorties respectives des filtres 31 et 32 restituent donc des signaux numériques démodulés uniquement si le signal reçu comporte des informations à la fréquence correspondante. Le filtre 31 est suivi d'un décodeur 33 de type BPSK dont la sortie fournit un train de bits à destination du circuit 17. Le filtre 32 est associé à un décodeur 34 de type ASK dont la sortie fournit un train de bits décodé au circuit 17.

Le mode de réalisation de la figure 6 tire profit du fait que, dans les systèmes de transmission par transpondeurs électromagnétiques, la transmission du lecteur vers un transpondeur s'effectue généralement par une modulation ASK (saut d'amplitude) à une fréquence de 106 kHz alors que la transmission d'un transpondeur vers un lecteur (ou pour l'invention vers un autre transpondeur) s'effectue par une modulation par saut de phase (BPSK) avec une fréquence de modulation de 847 kHz. On peut donc distinguer les types de modulation du côté du transpondeur destiné à décoder les deux types de signaux.

On notera bien entendu que, dans les deux cas, c'est la porteuse de 13,56 MHz qui est modulée par la modulation lecteur vers transpondeur et transpondeur vers lecteur.

Un avantage de la présente invention est qu'elle ne nécessite aucune modification des transpondeurs pour ce qui concerne la partie modulation. L'invention ne requiert qu'une modification de la partie démodulation des transpondeurs pour être en mesure d'interpréter des informations provenant d'un autre transpondeur dans le champ d'une borne, suffisamment proche pour un couplage mutuel entre deux transpondeurs.

Un autre avantage de la présente invention est qu'en permettant une communication directe entre deux transpondeurs, on peut résoudre les problèmes de conflit éventuels lorsque plusieurs transpondeurs sont présents dans le champ d'une même borne. En effet, à partir du moment où un transpondeur capte directement une information provenant d'un autre transpondeur grâce à l'invention, on peut prévoir pour celui-ci une interdiction d'émettre en même temps de sorte que la gestion temporelle des communications des transpondeurs vers une même borne est gérée directement par les transpondeurs.

Bien entendu, la présente invention est susceptible de diverses variantes et modifications qui apparaîtront à l'homme de l'art. En particulier, la réalisation pratique d'un démodulateur pour la mise en oeuvre de l'invention est à la portée de l'homme du métier à partir des indications fonctionnelles données ci-dessus et en fonction de la portée de couplage souhaitée entre deux transpondeurs voisins.

On notera que dans un mode de réalisation simplifié, il est possible au moyen d'un même démodulateur, de différencier les messages par analyse du code transmis. Toutefois, un tel mode de réalisation est réservé au cas de transpondeurs disposant de microprocesseur de calcul important et de stockage des bits transmis. En effet, pour être en mesure de différencier par analyse du code reçu, il faut pouvoir mémoriser une longueur de code suffisante et disposer d'un outil de calcul performant. L'avantage du mode de réalisation préféré de l'invention consistant à filtrer au moyen de deux têtes analogiques distinctes du démodulateur évite ces éléments de calcul et de stockage additionnels et rend l'invention applicable dans des transpondeurs utilisant des circuits de logique câblée pour interpréter les transmissions.

Parmi les applications de la présente invention, on signalera plus particulièrement les cartes à puce sans contact (par exemple, les cartes d'identification pour contrôle d'accès, les cartes porte-monnaie électroniques, les cartes de stockage d'informations sur le possesseur de la carte, les cartes de fidélité de consommateur, les cartes de télévision à péage, etc.), et les systèmes de lecture ou de lecture et/ou écriture de ces cartes (par exemple, les bornes ou portiques de contrôle d'accès, les distributeurs automatiques de produit, les terminaux d'ordinateurs, les terminaux téléphoniques, les téléviseurs ou décodeurs satellites, etc.). Dans ce genre d'application, la présente invention peut permettre, par exemple, la recharge d'une carte de transport à partir d'une carte porte monnaie électronique en couplant ces deux dernières dans un même champ (le lecteur ne servant alors plus qu'à générer un champ magnétique d'alimentation de ces cartes). Les dispositifs de sécurité correspondants peuvent alors rester dans les cartes, ce qui améliore la fiabilité des systèmes contre les piratages. La communication directe entre deux cartes peut en outre permettre une détection de priorité de communication lorsque celles-ci sont dans le champ d'une même borne.

## Revendications

1. Transpondeur electromagnétique destiné à prélever l'énergie nécessaire à son fonctionnement d'un champ rayonné par une borne (1) d'émission d'une porteuse à une première fréquence de téléalimentation et à rétromoduler le signal reçu au rythme d'une sous-porteuse à une deuxième fréquence inférieure à la première; comportant un circuit oscillant (L2, C2) en amont d' un moyen de redressement (13) propre à fournir une tension continue d'alimentation d'un circuit électronique comportant des moyens pour émettre des informations codées numériquement et des moyens pour démoduler des signaux modulés par ladite sous-porteuse, **caractérisé en ce qu'**il comporte un démodulateur (28, 30) propre a différencier des informations reçues au rythme de la sous porteuse d'un autre transpondeur par rapport à des informations reçues au rythme d'une troisième fréquence encore inférieure, depuis la borne de lecture-écriture (1).

2. Transpondeur selon la revendication 1, **caractérisé en ce que** ledit démodulateur (30) comporte deux branchés parallèle ayant chacune un filtre (31, 32) centré respective ment sur les deuxième et troisième fréquences, chaque filtre étant associé à un décodeur numérique (33, 34).

3. Transpondeur selon la revendication 2, **caractérisé en ce qu'**un premier décodeur (33) associé au filtre (31) centré sur la fréquence de rétromodulation est un décodeur de type par saut de phase, un deuxième décodeur (34) associé à la troisième fréquence étant un décodeur de type par saut d'amplitude.

4. Système de communication sans contact et sans fil entre au moins deux transpondeurs électromagnétiques dépourvus d'alimentation autonome, chaque transpondeur (10) comportant des moyens propres à prélever l'énergie nécessaire à l'alimentation de ses circuits, d'un champ électronique à une première fréquence de téléaliméntation rayonné par au moins une borne (1) de lecture-écriture, et des moyens pour démoduler des signaux émis par un autre transpondeur en modulation d'une sous-porteuse à une deuxième fréquenceinférieure à la première, **caractérisé en ce que** chaque transpondeur comporte un démodulateur (28, 30) propre à différencier des informations reçues au rythme de la sous-porteuse d'un autre transpondeur par rapport à des informations reçues, au rythme d'une troisième fréquence encore inférieure, depuis la borne de lecture-écriture (1).

5. Systèrne selon la revendication 4, **caractérisé en ce que** chaque transpondeur (10) comporte desdémodulateurs (31, 32) et décodeurs (33, 34) distinctsdédiés respectivement à la réception de signaux émis par un autre transpondeur et à la réception de signaux émis par la borne de lecture-écriture

6. Système selon la revendication 4 ou 5, **caractérisé en ce que** la première fréquence est à 13,56 MHz, la deuxième fréquence étant à 847,5 kHz et la troisième fréquence étant à 106,5 kHz.

## Claims

1. An electromagnetic transponder intended to draw the power necessary to its operation from a field radiated by a terminal (1) of transmission of a carrier at a first supply frequency, and to back-modulate the received signal at the rate of a sub-carrier at a second frequency lower than the first one, comprising an oscillating circuit (L2, C2) upstream of a rectifying means (13) capable of providing a D.C. supply voltage to an electronic circuit, the electronic circuit comprising means for transmitting digitally-coded information, and means for demodulating the signals modulated by said sub-carrier, **characterized in that** it comprises a demodulator (28, 30) capable of differentiating information received at the rate of the back-modulation sub-carrier of another transponder with respect to information received, at the rate of a third still lower frequency, from the read/write terminal (1).

2. The transponder of claim 1, **characterized in that** said demodulator (30) comprises two parallel branches, each having a filter (31, 32) respectively centered on the second and third frequencies, each filter being associated with a digital decoder (33, 34).

3. The transponder of claim 2, **characterized in that** a first decoder (33) associated with the filter (31) centered on the back-modulation frequency is a decoder of phase shift type, a second decoder (34) associated with the third frequency being a decoder of amplitude shift type.

4. A system of contactless and wireless communication between at least two electromagnetic transponders having no indenpendent power supply, each transponder (10) comprising means capable of drawing the power necessary to the supply of its circuits from an electromagnetic field at a first supply frequency radiated by at least one read/write terminal (1), and means for demodulating signals transmitted by another transponder in modulation of a sub-carrier at a still lower second frequency **characterized in that** each transponder comprises a demodulator (28, 30) capable of differentiating information received at the rate of the back-modulation sub-carrier of another transponder with respect to information received, at the rate of a third still lower frequency, from the read/write terminal (1).

5. The system of claim 4, **characterized in that** each transponder (10) comprises separate demodulators (31, 32) and decoders (33, 34) respectively dedicated to the reception of signals transmitted by another transponder and to the reception of signals transmitted by the read/write terminal.

6. The system of claim 4 or 5, **characterized in that** the first frequency is 13.56 MHz, the second frequency being 847.5 kHz, and the third frequency being 106.5 kHz.

## Patentansprüche

1. Elektromagnetischer Transponder mit der Bestimmung, die zu seinem Betrieb notwendige Energie einem Feld zu entnehznen, das von einem Terminal (1) für die Emission eines Trägers mit einer ersten Frequenz zur Fernspeisung bzw -Stromversorgung emittiert wird, und das Empfangssignal im Rhythmus eines Sub-Trägers mit einer zweiten Frequenz, die kleiner als die erste ist, zu retromodulieren, wobei der Transponder einen Schwingkreis (L2, C2) stromaufwärts einer Gleichrichtvorrichtung (1.3) aufweist, die eine Gleichspannung zur Speisung bzw Stromversorgung einer elektronischen Schaltung zu liefern vermag, welche Mittel zur Emission von digital kodierten Informationen sowie Mittel zur Demodulation der durch den genannten Unterträger modulierten Signale aufweist, **dadurch gekennzeichnet , dass** der Transponder einen Demodulator (28, 30) aufweist, welcher im Rhythmus des Unterträgers empfangene Informationen eines anderen Transponders zu unterscheiden vermag von im Rhythmus einer dritten, noch niedrigeren Frequenz empfangenen Informationen von dem Lese-Schreib-Terminal (1).

2. Transponder nach Anspruch 1, **dadurch gekennzeichnet, dass** der genannte Demodulator (30) zwei parallele Zweige aufweist, deren jeder jeweils ein auf die zweite bzw. die dritte Frequenz zentriertes Filter (31, 32) aufweist, wobei jedes Filter jeweils einem digitalen Decoder (33, 34) zugeordnet ist,

3. Transponder nach Anspruch 2, **dadurch gekennzeichnet, dass** ein erster Decoder (33), der dem auf die Retromodulationsfrequenz zentrierten Filter (31) zugeordnet ist, ein Decoder vom Phasensprung-Typ ist und dass ein zweiter, der dritten Frequenz zugeordnete Decoder (34) ein Decoder vom Amplitudensprung-Typ ist.

4. System zur kontakt- und drahtlosen Kommunikation zwischen wenigstens zwei elektromagnetischen Transpondern ohne autonome Stromversorgung, wobei jeder Transponder (10) jeweils geeignete Mittel zur Entnahme der für die Stromversorgung seiner Schaltungen notwendigen Energie aus einem von wenigstens einem Lese-Schreib-Terminal (1) ausge-strahlten elektronischen Feld mit einer ersten Fernstromversorgungs-Frequenz aufweist sowie Mittel zur Demodulation von Signalen, die von einem anderen Transponder in Modulation eines Sub-Trägers mit einer zweiten Frequenz, die kleiner als die erste Frequenz ist, emittiert werden, **dadurch gekennzeichnet, dass** jeweils jeder Transponder einen Demodulator (28, 30) aufweist, der im Rhythmus des Sub-Trägers eines anderen Transponders empfangene Informationen zu unterscheiden vermag relativ bezüglich im Rhythmus einer dritten, noch niedrigeren Frequenz empfangener Informationen, von dem Lese-Schreib-Terminal (1).

5. System nach Anspruch 4, **dadurch gekennzeichnet, dass** jeweils jeder Transponder (10) jeweils gesonderte Demodulatoren (31, 32) und Decoder (33, 34) aufweist, die jeweils für den Empfang von durch einen anderen Transponder emittierten Signalen bzw für den Empfang von durch das Lese-Schreib-Terminal emittierten Signalen dediziert sind

6. System nach Anspruch 4 oder 5, **dadurch gekennzeichnet**, class die erste Frequenz eine Frequenz von 13,56 MHz, die zweite Frequenz eine Frequenz von 847,5 kHz und die dritte Frequenz eine Frequenz von 106,5 kHz ist.
